**Europäisches Patentamt**

**European Patent Office**

**Office européen des brevets**

(19)

(11) Veröffentlichungsnummer : **0 328 896 B1**

## (12) EUROPÄISCHE PATENTSCHRIFT

(45) Veröffentlichungstag der Patentschrift :
**06.05.92 Patentblatt 92/19**

(51) Int. Cl.$^5$ : **G01B 7/28,** G01B 7/12

(21) Anmeldenummer : **89101038.1**

(22) Anmeldetag : **21.01.89**

(54) **Sensor zur berührungsfreien Erfassung der Innenkontur von metallischen Bauteilen.**

(30) Priorität : **18.02.88 DE 3805030**

(43) Veröffentlichungstag der Anmeldung :
**23.08.89 Patentblatt 89/34**

(45) Bekanntmachung des Hinweises auf die
Patenterteilung :
**06.05.92 Patentblatt 92/19**

(84) Benannte Vertragsstaaten :
**CH DE ES FR GB IT LI SE**

(56) Entgegenhaltungen :
**DE-A- 1 473 863**
**DE-A- 2 457 670**
**GB-A- 2 035 571**
**US-A- 3 363 170**

(73) Patentinhaber : **ROBERT BOSCH GMBH**
**Postfach 30 02 20**
**W-7000 Stuttgart 30 (DE)**

(72) Erfinder : **Dobler, Klaus, Dr.-Ing.**
**Bettäckerstrasse 12**
**W-7016 Gerlingen (DE)**
Erfinder : **Hachtel, Hansjörg, Dipl.-Ing.**
**Buchenstrasse 4**
**W-7251 Weissach (DE)**

EP 0 328 896 B1

## Beschreibung

Die Erfindung geht aus von einem Sensor zur berührungsfreien Erfassung der Innenkontur von metallischen Bauteilen, insbesondere Muttern etc. nach der Gattung des Hauptanspruchs. Es ist bereits ein derartiger Sensor bekannt, bei dem die Gestalt von Schrauben mit Hilfe eines optischen Verfahrens bestimmt wird. Dabei wird mit einem Lichtstrahl die Gestalt der Schrauben abgetastet. Es können aber Innenkonturen nur mit sehr großem Aufwand optisch überprüft werden.

In der Schrift GB-A 2 035 571 wird ein Sensor zur berührungsfreien Erfassung der Innenkontur von metallischen Bauteilen beschrieben. Dabei sind die auf einem Spulenkörper aufgewickelten Spulen von einem Schutzgehäuse aus hartem Kunststoff umgeben. Dieser Kunststoff ist ein elektrisch nicht leitendes Material, was den Meßeffekt nicht beeinflußt, da das Magnetfeld der Spulen durch die Schutzhülse hindurch geht. Die Verschleißfestigkeit dieses Materials reicht aber für besondere Einsatzmöglichkeiten nicht aus.

Der erfindungsgemäße Sensor mit den kennzeichnenden Merkmalen des Hauptanspruchs hat demgegenüber den Vorteil, daß die Innenkontur von Bauteilen schnell, relativ genau und weitgehend verschleißfrei bestimmbar ist. Der Sensor ist sehr einfach bei einem kontinuierlich, automatisch ablaufenden Arbeitsvorgang oder auch bei Einzelmessung einsetzbar. Die Schutzhülse des Sensors kann mit relativ kleinem Durchmesserunterschied gegenüber der zu bestimmenden Kontur angefertigt werden. Der Verschleiß der Schutzhülse ist aufgrund der verwendbaren Materialien gering. Bekanntlich ist aber eine gewisse verschleißbedingte Abnützung der Schutzhülse bei einer großen Anzahl von Meßzyklen unabdingbar. Da die Schutzhülse leicht austauschbar ist, kann die Lebensdauer des Sensors durch leichten und einfachen Austausch der abgenützten Schutzhülse verlängert werden. Aufgrund der besonderen Ausbildung ist die Verwendung von Schutzhülsen möglich, die aus verschleißfestem, ferromagnetischem Stoff bestehen. Da die Schutzhülse austauschbar ist, ist ferner - in gewissen Grenzen - der Sensor leicht den zu bestimmenden Innenkonturen anpaffbar. Die austauschbare Schutzhülse kann auch durch entsprechende Materialauswahl leicht den gewünschten Anforderungen angepaßt werden.

Durch die in den Unteransprüchen aufgeführten Maßnahmen sind vorteilhafte Weiterbildungen und Verbesserungen des im Hauptanspruch angegebenen Sensors möglich.

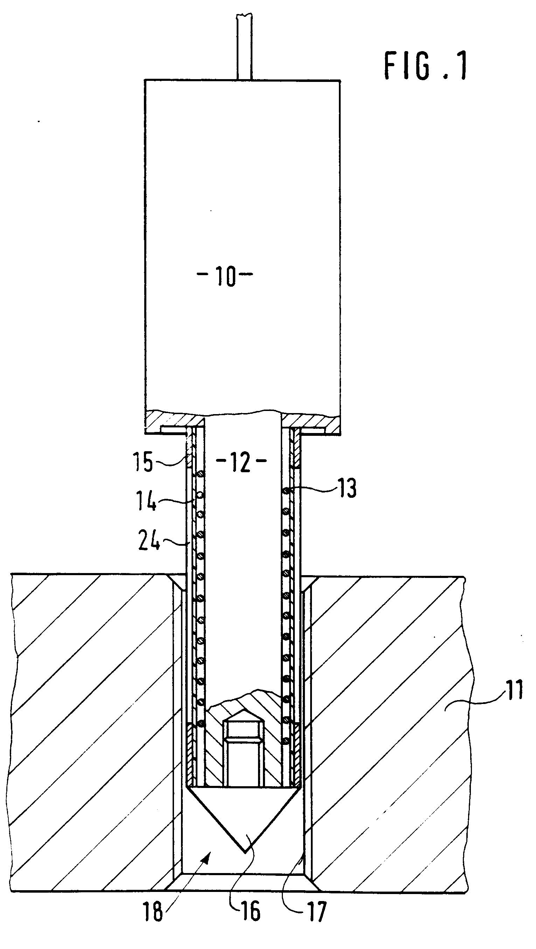

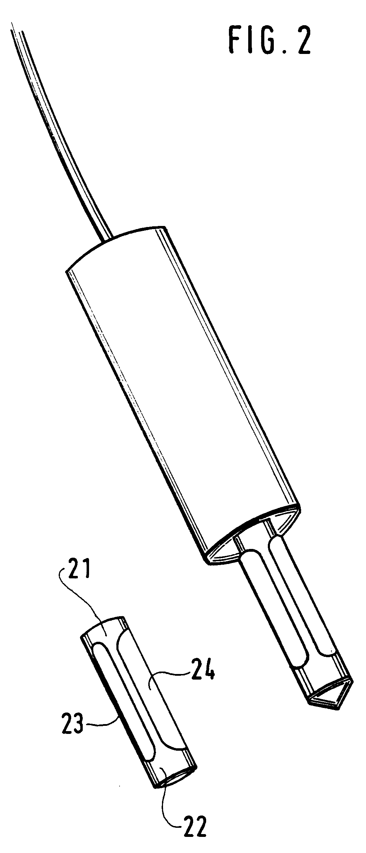

Ein Ausführungsbeispiel der Erfindung ist in der Zeichnung dargestellt und im der nachfolgenden Beschreibung näher erläutert. Es zeigen figur 1 einen Längsschnitt durch einen Sensor und figur 2 eine Darstellung der Schutzhülse.

In figur 1 ist mit 10 das Gehäuse eines Sensors zur Bestimmung der Innenkontur von metallischen Bauteilen 11 bezeichnet. Aus dem Gehäuse 10 ragt ein Träger 12, auf dem eine vom einem hochfrequenten Wechselstrom durchflossene Meßspule 13 gewickelt ist. Diese ist von einer aus nicht elektrisch leitendem Stoff, insbesondere Kunststoff bestehenden Hülse 14 umgeben. Über die Meßspule 13 und die Hülse 14 ist eine Schutzhülse 15 angeordnet, die von einer in das dem Gehäuse 10 abgewandten Ende des Trägers 12 einschraubbaren Zentrierung 16 gegen das Gehäuse 10 gedrückt wird. Die Hülse 14 dient zum Schutz gegen mögliche Beschädigungen der Meßspule 13, die beim Austauschen der Schutzhülse 15 auftreten können. Die Zentrierung 16 befestigt sowohl die Schutzhülse 15 und dient gleichzeitig zur Führung des Trägers 12 in der das Innengewinde 17 aufweisenden Bohrung 18 des Bauteils 11. Hierzu ist die Zentrierung 16 konisch ausgebildet.

In Figur 2 ist die Schutzhülse 15 näher dargestellt. Sie ist als Käfig ausgebildet und weist einen oberen und einen unteren Ring 21 bzw. 22 auf und diese verbindende längliche Stege 23, so daß sich in regelmäßigen Abständen Längsfenster 24 bilden. Die Längsfenster 24 sollten wenigstens die Länge der Meßspule 13 haben. Bei einem zu bestimmenden Gewindedurchmesser von $\leq 12$ mm sollten die Stege 23 eine Breite von ca. 1 bis 2 mm, die Längsfenster 24 eine Breite von ca. 3 bis 5 mm und die Schutzhülse 15 eine Wandstärke von ca. 0,5 bis 1 mm haben. Der Außendurchmesser der Schutzhülse 15 sollte dabei ca. 0,2 mm kleiner als der zu bestimmende Kerndurchmesser des Innengewindes 17 sein. Die Schutzhülse 15 ist aus gehärtetem Stahl gefertigt. Dadurch ist die Meßspule 13 vor Beschädigungen geschützt, und auch die Schutzhülse 15 selbst hat eine sehr hohe Verschleißfestigkeit. Obwohl die Schutzhülse 15 aus einem ferromagnetischen Material besteht, ist die durch die Abschirmwirkung des Materials verursachte Empfindlichkeitseinbuße des sogenannten Wirbelstrommeßeffektes vernachlässigbar so gering, daß weiterhin mit Trägerfrequenzen von > 100 kHz gemessen werden kann. Durch die Ausbildung möglichst großflächiger Längsfenster 24 wird die Abschirmwirkung der Schutzhülse 15 relativ gering gehalten.

Wird die Meßspule 13 von einem hochfrequenten Wechselstrom durchflossen, so entsteht an der Meßspule 13 ein magnetisches Wechselfeld. Dieses bewirkt auf der metallischen Oberfläche der Innenkontur Wirbelströme. Je größer dabei die vom Magnetfeld durchsetzte Fläche der Innenkontur ist, desto mehr Wirbelströme werden erzeugt. Ferner ist die Größe der erzeugten Wirbelströme abhängig vom verwendeten Material der zu untersuchenden Oberfläche sowie vom Abstand der Meßspule zu den Oberflächen der Innenkontur. Durch die erzeugten Wirbelströme wird der Spulen-Wechselstromwiderstand verringert, was eine Verkleinerung der an der Spule anliegenden Spannung bewirkt. Ist der Abstand der Oberfläche der Innenkontur zur Spule überall gleich groß, so ist diese Änderung des Wechselstromwiderstandes in allen Bereichen der Meßspule 13 nahezu gleich groß. Diese optimale zentrische Position der Meßspule in der Bohrung 18 ist in der Praxis nur schwer möglich. Ist der Abstand auf einer Seite verringert, so wird durch eine Erhöhung der erzeugten Wirbelströme in der Oberfläche der Innenkontur der Wechselstromwiderstandswert der Spule in diesem Bereich verkleinert. Gleichzeitig bewirkt die zwangsläufig sich ergebende Vergrößerung des Abstandes auf der anderen Seite eine Verminderung der in der Oberfläche erzeugten Wirbelströme und damit eine Vergrößerung des Widerstandswertes der Spule in diesem Bereich. Dadurch ist das in der nicht dargestellten Schaltung abgegriffene Meßsignal nahezu vollständig nur vom Durchmesser und von der Form der Innenkontur abhängig, wobei konstante Spuleneintauchtiefe in das Gewindeloch sowie gleiches Material der Innenkontur vorausgesetzt wird.

Weicht die Innenkontur an einer Stelle von der zu prüfenden idealen Form ab, so entspricht das Meßsignal nicht mehr einem vorher zu bestimmenden Vergleichswert. Abhängig von der Form und der Höhe des Meßsignals kann man fehlerhafte Gewindeschnitte, zu kurze Gewinde, oder sogar Qualitätsfehler erkennen. Sind hingegen die Gewinde in Ordnung, so erhält man nahezu gleich hohe Meßsignale. Immer wenn sich infolge fehlerhafter Schraubengeometrien zu wenig Wirbelströme ausbilden können, z.B. wenn der Innengewindedurchmesser zu groß ist oder die Bohrung zu kurz ist, bildet sich ein niedrigeres Meßsignal aus. Werden jedoch zu viel Wirbelströme erzeugt, z.B. wenn der Bohrungsdurchmesser zu klein ist, der Gewindeschnitt fehlt oder unvoll ständig ist, ergeben sich höhere Meßsignale. Ob die Meßsignale höher oder tiefer sind, hängt von der Verschaltung der Spule in der zu verwendenden elektrischen Auswerteschaltungsanordnung ab.

Bei Durchlauf eines Meßzyklus, d.h. bei automatischer nacheinander folgender Bestimmung der Innenkontur einer großen Anzahl von Bohrungen, muß jedes Mal der Träger 12 mit der Meßspule 13 in die Bohrung 17 eingeführt werden. Dabei ist es aufgrund der notwendigen geringen Toleranzen kaum vermeidbar, daß die Schutzhülse 15 an der Innenkontur reibt. Dadurch ist die Schutzhülse 15 bei sehr vielen Meßvorgängen einem Verschleiß ausgesetzt. Materialien, die den Wirbelstromeffekt nicht beeinflussen würden und als Schutzhülsen verwendbar sind, haben aber meist auch keine hohe Verschleißfestigkeit oder sind schwer bearbeitbar oder spröde. Aufgrund der besonderen Ausbildung der Schutzhülse mit relativ geringen Stegbreiten und möglichst großflächigen Längsfenstern dämpft eine Schutzhülse aus gehärtetem Stahl nur nahezu vernachlässigbar gering die Wirbelstromausbildung auf der Meßspule. Stahl weist eine hohe Verschleißfestigkeit auf, und ist deshalb als Material für die Hülse besonders geeignet.

Es ist möglich, die Schutzhülse 15 mit Hilfe der aufschraubbaren Zentrierung auszutauschen. Dadurch ist der Sensor leicht den verschiedenen, zu bestimmenden Durchmessern der Bohrung 17 anpaßbar. Ferner ist auch die Schutzhülse nach einer bestimmten Meßzykluszahl bei einem gewissen Verschleiß austauschbar.

Mit Hilfe des Sensors ist es möglich alle Arten der Innenkonturen z.B. von Muttern oder von Bohrungen in verschiedenen Bauteilen so wohl in einem automatischen Meßzyklus, als auch bei einer Einzelmessung zu erfassen.

## Patentansprüche

1. Sensor zur berührungsfreien Erfassung der Innenkontur von metallischen Bauteilen (11), insbesondere Innengewinde, Bohrungen etc., mit einer von einem hochfrequenten Wechselstrom durchflossenen und auf einem Träger (12) angeordneten Spule (13), die von einem Schutzgehäuse (15) aus verschleißfestem Material umgeben ist, dadurch gekennzeichnet, daß das schutzgehäuse (15) aus gehärtetem, hochverschleißfestem Stahl besteht, und daß das Schutzgehäuse (15) in Achsrichtung der Spule (13) ausgebildete Fenster (24) aufweist, die im Umfang des Schutzgehäuses (15) ausgebildet sind.

2. Sensor nach Anspruch 1, dadurch gekennzeichnet, daß die Fenster (24) mindestens die Länge der Meßspule (13) aufweisen.

3. Sensor nach Anspruch 1 oder 2, dadurch gekennzeichnet, daß die Fenster (24) in regelmäßiger Folge im Umfang des Schutzgehäuses (15) angeordnet sind.

4. Sensor nach einem der Ansprüche 1 bis 3, dadurch gekennzeichnet, daß das Schutzgehäuse (15) austauschbar über die Spule (13) angeordnet ist.

5. Sensor nach einem der Ansprüche 1 bis 4, dadurch gekennzeichnet, daß zwischen Meßspule (13) und Schutzgehäuse (15) eine Hülse (14) aus nicht elektrische leitendem Material angeordnet ist.

6. Sensor nach einem der Ansprüche 1 bis 5, dadurch gekennzeichnet, daß das Schutzgehäuse (15) mit Hilfe einer Zentriervorrichtung (16) am Träger (12) befestigt ist.

## Claims

1. Sensor for contactfree determination of the inner contour of metallic components (11), in particular inner threads, bores etc., having a coil (13) through which a high-frequency alternating current flows and which is arranged on a carrier (12), which coil is surrounded by a protective housing (15) of wear-resistant material, characterised in that the protective housing (15) consists of hardened, highly wear-resistant steel, and in that the protective housing (15) has windows (24) formed in the axial direction of the coil (13) and formed in the circumference of the protective housing (15).

2. Sensor according to Claim 1, characterised in that the windows (24) are at least the length of the measuring coil (13).

3. Sensor according to Claim 1 or 2, characterised in that the windows (24) are arranged in a regular sequence in the circumference of the protective housing (15).

4. Sensor according to one of Claims 1 to 3, characterised in that the protective housing (15) is arranged over the coil (13) in a replaceable manner.

5. Sensor according to one of Claims 1 to 4, characterised in that arranged between measuring coil (13) and protective housing (15) is a sheath (14) of non-electrically conductive material.

6. Sensor according to one of Claims 1 to 5, characterised in that the protective housing (15) is secured with the aid of a centring device (16) on the carrier (12).


## Revendications

1. Détecteur pour saisir sans contact le contour intérieur d'éléments métalliques (11), en particulier de filetages intérieurs, d'alésages, etc., avec une bobine (13) parcourue par un courant alternatif à haute fréquence et disposée sur un support (12), bobine qui est entourée par un carter de protection (15) en matériau résistant à l'usure par frottement, détecteur caractérisé en ce que le carter de protection (15) est réalisé en acier trempé, à résistance élevée à l'usure par frottement et en ce que le carter de protection (15) présente des fenêtres (24) constituées dans la direction axiale de la bobine (13), qui sont formées sur le pourtour du carter de protection (15).

2. Détecteur selon la revendication 1, caractérisé en ce que les fenêtres (24) présentent au moins la longueur de la bobine de mesure (13).

3. Détecteur selon la revendication 1 ou 2, caractérisé en ce que les fenêtres (24) sont disposées selon une suite régulière sur le pourtour du carter de protection (15).

4. Détecteur selon l'une des revendications 1 à 3, caractérisé en ce que le carter de protection (15) est disposé sur la bobine (13) de façon interchangeable.

5. Détecteur selon l'une des revendications 1 à 4, caractérisé en ce que entre la bobine de mesure (13) et le carter de protection (15) est disposé une douille (14) en un matériau non conducteur de l'électricité .

6. Détecteur selon l'une des revendications 1 à 5, caractérisé en ce que le carter de protection (15) est fixé sur le support (12) à l'aide d'un dispositif de centrage (16).

FIG .1

FIG. 2